# EUROPEAN PATENT APPLICATION

(11) **EP 4 802 892 A1**
(43) Date of publication of application: **09.09.2026**
(21) Application number: 25800694.9
(22) Date of filing: 24.02.2025
(51) Int. Cl.: A01N 25/28, A01N 25/24, A01N 25/22, A01N 63/20, A01N 63/22, A01N 63/27, A01P 21/00

(54) **NANOCOATED GROWTH-PROMOTING BACTERIAL AGENT, AND COMPOSITE GROWTH-PROMOTING BACTERIAL AGENT, PREPARATION METHOD THEREFOR AND USE THEREOF**

(30) Priority: 19.08.2024 CN 202411134947
(71) Applicant: Hana Argritect (Beijing) Biotechnology Co., Ltd., Beijing 100083 (CN)
(72) Inventor: ZHAO, Qianbao, Haidian District, Beijing 100083 (CN); XU, Ke, Haidian District, Beijing 100083 (CN); ZHU, Yongguan, Haidian District, Beijing 100083 (CN); CAO, Yuhong, Haidian District, Beijing 100083 (CN); ZHANG, Limei, Haidian District, Beijing 100083 (CN)
(74) Representative: Murgitroyd & Company
(86) International application number: PCT/CN2025/078754
(87) International publication number: WO 2026/040367

(57) **Abstract**

The present disclosure belongs to the technical field of microorganisms, and in particular relates to a nano-coated growth-promoting bacterial agent and a composite growth-promoting bacterial agent, preparation methods and use thereof. The nano-coated growth-promoting bacterial agent includes a growth-promoting bacterial agent and a nano-coating formed by self-assembly of a plant-derived polyphenol and a soluble multivalent metal ion on the surface of the growth-promoting bacterial agent. The key to the present disclosure is to employ the plant-derived polyphenol and the soluble multivalent metal ion to self-assemble on the surface of the growth-promoting bacterial agent to form a nano-coating. Based on the interaction of the growth-promoting bacterial agent with the phyllosphere, the leaf face adhesion performance of the growth-promoting bacterial agent is significantly enhanced, the loss rate of the growth-promoting bacterial agent under rainfall erosion is effectively reduced, and the survival rate and colonization of the growth-promoting bacterial agent in the phyllosphere are enhanced.

## Description

### TECHNICAL FIELD

The present disclosure belongs to the technical field of microorganisms, and in particular relates to a nano-coated growth-promoting bacterial agent and a composite growth-promoting bacterial agent, preparation methods and use thereof.

### BACKGROUND

Plant growth-promoting bacteria refer to a type of bacteria that can promote plant growth and colonize on the surfaces of or inside plants. Plant growth-promoting bacteria can promote plant nutrient absorption, induce the production of phytohormones, decompose harmful substances or resist pathogen infection, thereby achieving direct or indirect growth-promoting effects. today with's population growth and increasingly urgent food demand, the abuse of fertilizers and pesticides in agricultural production has brought about a series of serious environmental pollution problems, such as decreased soil fertility and water body eutrophication, etc. The use of plant growth-promoting bacteria to prepare microbial inoculants is an important means for replacing fertilizers and achieving healthy and sustainable agricultural development. Microbial agents need to survive and successfully colonize on the surfaces of or inside crops after administration in order to interact with plants and exert a growth-promoting effect. Recent studies have gradually revealed that the abundant leaf area of plants provides a good habitat for microorganisms. Compared with the soil environment, the phyllosphere habitat and bacterial community structure are relatively simple, the leaf area is abundant, and the spray application of the agent is more flexible. The key to utilizing plant growth-promoting bacteria to prepare foliar microbial agents lies in exploring appropriate inoculant systems to help the foliar microbial agents attach to the phyllosphere of crops and establish a symbiotic colonization relationship.

Currently, the research on foliar microbial inoculation systems is still immature, there is little research on application of the foliar microbial inoculation systems, and more attention is paid to the simple spray application of a growth-promoting bacterial suspension. During foliar spraying, traditional bacterial solution formulations do not have enough effective residence times on crop leaves. Problems such as drifting, jumping, and rolling of mist droplets, rainfall erosion, and decomposition will reduce the effective colonization rates of growth-promoting bacteria. Additionally, the strong hydrophobicity of wax layers on the leaf surfaces and environmental stresses such as dryness and ultraviolet rays also pose many challenges to the survival and colonization of growth-promoting bacteria. Therefore, there is an urgent need to develop novel foliar growth-promoting bacterial agents that have strong adhesion to leaf surfaces of plants and a long phyllosphere residence time, and are conducive to the phyllosphere survival and colonization of the growth-promoting bacteria.

### SUMMARY

The first objective of the present disclosure is to provide a novel nano-coated growth-promoting bacterial agent, which has strong adhesion to a leaf face of a plant and a long survival time, and can effectively enhance the phyllosphere colonization of a growth-promoting bacterium.

The second objective of the present disclosure is to provide a method for preparing the aforementioned nano-coated growth-promoting bacterial agent.

The third objective of the present disclosure is to provide a composite growth-promoting bacterial agent.

The fourth objective of the present disclosure is to provide use based on the aforementioned nano-coated growth-promoting bacterial agent and/or composite growth-promoting bacterial agent.

Specifically, the nano-coated growth-promoting bacterial agent provided by the present disclosure includes a growth-promoting bacterial agent and a nano-coating formed by a reaction of a plant-derived polyphenol and a soluble multivalent metal ion on the surface of the growth-promoting bacterial agent.

In a preferred embodiment, the thickness of the nano-coating is 20-100 nm.

In a preferred embodiment, the mass ratio of the plant-derived polyphenol to the soluble multivalent metal ion is (1-10):1.

In a preferred embodiment, the growth-promoting bacterial agent is at least one selected from *Klebsiella*, *Paenibacillus polymyxa*, *Bacillus velezensis* and *Pseudomonas*.

In a preferred embodiment, the plant-derived polyphenol is at least one selected from tannic acid, gallic acid, catechin and apple polyphenol.

In a preferred embodiment, the soluble multivalent metal ion is selected from at least one of Fe³⁺, Al³⁺, Mg²⁺, Zn²⁺ and Ti⁴⁺.

The method for preparing a nano-coated growth-promoting bacterial agent provided by the present disclosure includes mixing the growth-promoting bacterial agent, the plant-derived polyphenol and the soluble multivalent metal ion in a solution, so that the plant-derived polyphenol and the soluble multivalent metal ion self-assemble on the surface of the growth-promoting bacterial agent to form a nano-coating.

In a preferred embodiment, the mixing is carried out in a manner including the following steps:
step S1. mixing a bacterial suspension of the growth-promoting bacterial agent with a solution of the plant-derived polyphenol uniformly by vortexing to obtain a bacterial suspension/plant-derived polyphenol solution; and
step S2. mixing the bacterial suspension/plant-derived polyphenol solution with a solution of the soluble multivalent metal ion uniformly by vortexing, and then optionally washing with a PBS buffered solution to obtain the nano-coated growth-promoting bacterial agent.

In a preferred embodiment, in the step S1, the bacterial suspension of the growth-promoting bacterial agent is obtained by culturing an activated growth-promoting bacterial agent to a late logarithmic growth phase, collecting the bacteria by centrifugation and washing the bacteria, and then resuspending the obtained growth-promoting bacterial agent in deionized water.

In a preferred embodiment, in the step S1, the viable bacteria count in the bacterial suspension of the growth-promoting bacterial agent is 1 × 10⁸ to 1 × 10⁹ CFU/mL.

In a preferred embodiment, in the step S1, the concentration of the solution of the plant-derived polyphenol is 5-20 mg/mL.

In a preferred embodiment, in the step S1, the usage ratio of the bacterial suspension of the growth-promoting bacterial agent to the solution of the plant-derived polyphenol is 600 µL:(25-100) µL.

In a preferred embodiment, in the step S1, the time for the mixing uniformly by vortexing is 10-30 s.

In a preferred embodiment, in the step S2, the concentration of the solution of the soluble multivalent metal ion is 0.5-5 mg/mL.

In a preferred embodiment, in the step S2, the usage ratio of the solution of the soluble multivalent metal ion to the bacterial suspension of the growth-promoting bacterial agent is (25-100) µL:600 µL.

In a preferred embodiment, in the step S2, the time for the mixing uniformly by vortexing is 10-30 s.

In a preferred embodiment, in the step S2, the pH value of the PBS buffered solution is 7.2-7.4.

The composite growth-promoting bacterial agent provided by the present disclosure includes the nano-coated growth-promoting bacterial agent and a prebiotic.

In a preferred embodiment, the mass ratio of the nano-coated growth-promoting bacterial agent to the prebiotic is 100:(1-100).

In a preferred embodiment, the prebiotic is an alginate.

In a preferred embodiment, the composite growth-promoting bacterial agent is used in a form of a solution.

The present disclosure further provides use of the nano-coated growth-promoting bacterial agent and/or the composite growth-promoting bacterial agent in promoting plant foliage growth.

The key to the present disclosure is to employ the plant-derived polyphenol and the soluble multivalent metal ion to self-assemble on the surface of the growth-promoting bacterial agent to form the nano-coating. Based on the interaction of the nano-coated growth-promoting bacterial agent with the phyllosphere, the leaf surface adhesion performance of the nano-coated growth-promoting bacterial agent is significantly enhanced, the loss rate of the growth-promoting bacterial agent under rainfall erosion is effectively reduced, and the survival rate and colonization of the growth-promoting bacterium in the phyllosphere are enhanced. Also, the nano-coating formed by the reaction of the plant-derived polyphenol and the soluble multivalent metal ion on the surface of the growth-promoting bacterial agent is single-cell coated, which facilitates the growth-promoting bacterium to resist environmental stress. In addition, the nano-coating does not affect the metabolism and reproduction of the growth-promoting bacterium, has good biocompatibility and storage stability, and can protect the growth-promoting bacterium from stresses such as active oxygen and ultraviolet rays. Moreover, the self-assembly reaction of the present disclosure is carried out in a buffered solution with a mild pH and can be stably stored in a water-based buffered solution for a long time.

### BRIEF DESCRIPTION OF THE DRAWINGS

FIG. 1 is a scanning electron micrograph of a nano-coated growth-promoting bacterial agent provided by the present disclosure;
FIG. 2 is a transmission electron microscope diagram of the nano-coated growth-promoting bacterial agent provided by the present disclosure;
FIG. 3 is a laser confocal image of the nano-coated growth-promoting bacterial agent provided by the present disclosure;
FIG. 4 is a diagram showing the metabolic activity of the nano-coated growth-promoting bacterial agent provided by the present disclosure;
FIG. 5 is a diagram showing the storage stability result of the nano-coated growth-promoting bacterial agent provided by the present disclosure;
FIG. 6 is a diagram showing the change in the survival rate of the nano-coated growth-promoting bacterial agent provided by the present disclosure in hydrogen peroxide;
FIG. 7 is a diagram showing the change in the survival rate of the nano-coated growth-promoting bacterial agent provided by the present disclosure under ultraviolet irradiation;
FIG. 8 is a comparison diagram of the rolling angle of the nano-coated growth-promoting bacterial agent provided by the present disclosure on the leaf surface of rice; and
FIG. 9 is a diagram showing the result of the effect of the nano-coated growth-promoting bacterial agent provided by the present disclosure on the biomass of rice in a greenhouse experiment.

### DETAILED DESCRIPTION OF THE EMBODIMENTS

The nano-coated growth-promoting bacterial agent provided by the present disclosure includes a growth-promoting bacterial agent and a nano-coating formed by self-assembly of a plant-derived polyphenol and a soluble multivalent metal ion on the surface of the growth-promoting bacterial agent. The nano-coated growth-promoting bacterial agent has a supramolecular network structure and good microbial compatibility. It can protect a growth-promoting bacterium from stresses such as active oxygen and ultraviolet rays, and meanwhile interacts with the phyllosphere, which can enhance the adhesion performance of the growth-promoting bacterium to the phyllosphere, effectively reduce the loss rate of the growth-promoting bacterium under rainfall erosion, enhance the colonization of the growth-promoting bacterium in the phyllosphere, and has a significant promoting effect on crop growth. The thickness of the nano-coating is preferably 20-100 nm, e.g. 20 nm, 30 nm, 40 nm, 50 nm, 60 nm, 70 nm, 80 nm, 90 nm, 100 nm or any value therebetween. A mass ratio of the plant-derived polyphenol to the soluble multivalent metal ion is preferably (1-10):1, e.g. 1:1, 2:1, 4:1, 6:1, 8:1, 10:1 or any value therebetween.

In the present disclosure, the growth-promoting bacterial agent can be various existing bacteria that can promote plant growth, and is particularly preferably at least one of *Klebsiella*, *Paenibacillus polymyxa*, *Bacillus velezensis* and *Pseudomonas*. The inventors of the present disclosure have found that when at least one of *Klebsiella*, *Paenibacillus polymyxa*, *Bacillus velezensis* and *Pseudomonas* is selected as the growth-promoting bacterial agent, it is more beneficial for a crop to attach to the phyllosphere and establish a symbiotic colonization relationship with the phyllosphere, thereby better promoting plant growth.

In the present disclosure, the plant-derived polyphenol is a polyphenol compound present in plants, which has a benzene ring conjugated structure and groups such as a phenolic hydroxyl group, giving an inoculant antioxidant ability and ultraviolet absorption ability, and being capable of protecting the growth-promoting bacterium from stresses such as active oxygen and ultraviolet rays. The plant-derived polyphenol can be derived from fruits, vegetables, nuts, tea leaves, grains, beans, etc. Common polyphenol compounds include flavonoids, resveratrol, stilbenes, lignans, etc. Specific examples of them include but are not limited to: at least one of anthocyanidin, flavanol, isoflavone, tannic acid, gallic acid, quercetin, kaempferol, catechin and apple polyphenol, and preferably at least one selected from tannic acid, gallic acid, catechin and apple polyphenol.

In the present disclosure, the term "soluble multivalent metal ion" refers to a soluble metal ion with a valence state of two or higher. The valence state of the soluble multivalent metal ion is preferably positive divalent, positive trivalent, positive tetravalent, etc. Specific examples of the positive divalent soluble metal ion include, but are not limited to: Mg²⁺, Zn²⁺, Mn²⁺, etc. Specific examples of the positive trivalent soluble metal ion include, but are not limited to: Fe³⁺, Al³⁺, Cr³⁺, etc. Specific examples of the positive tetravalent soluble metal ion include, but are not limited to: Ti⁴⁺, Zr⁴⁺, etc. Most preferably, the soluble multivalent metal ion is selected from at least one of Fe³⁺, Al³⁺, Mg²⁺, Zn²⁺ and Ti⁴⁺. Moreover, the soluble multivalent metal ion may exist in the form of a salt thereof, e.g. a form of a chloride, a sulfate, etc.

The inventors of the present disclosure have found that when tannic acid, gallic acid, catechin and apple polyphenol are selected as the plant-derived polyphenol and meanwhile at least one of Fe³⁺, Al³⁺, Mg²⁺, Zn²⁺ and Ti⁴⁺ is selected as the soluble multivalent metal ion, the plant-derived polyphenol and the soluble multivalent metal ion can play a better synergistic role, and the nano-coating formed by the two can better adhere to the phyllosphere, which can further enhance the survival rate and colonization of the growth-promoting bacterium in the phyllosphere.

The method for preparing a nano-coated growth-promoting bacterial agent provided by the present disclosure includes mixing the growth-promoting bacterial agent, the plant-derived polyphenol and the soluble multivalent metal ion in a solution, so that the plant-derived polyphenol and the soluble multivalent metal ion self-assemble on the surface of the growth-promoting bacterial agent to form a nano-coating.

The present disclosure has no particular limitation on the form of the mixing, as long as the plant-derived polyphenol and the soluble multivalent metal ion can react on the surface of the growth-promoting bacterial agent to form the nano-coating. In a preferred embodiment, the mixing is carried out in a manner including the following steps: step S1. mixing a bacterial suspension of the growth-promoting bacterial agent with a solution of the plant-derived polyphenol uniformly by vortexing to obtain a bacterial suspension/plant-derived polyphenol solution; and step S2. mixing the bacterial suspension/plant-derived polyphenol solution with a solution of the soluble multivalent metal ion uniformly by vortexing, and then optionally washing with a PBS buffered solution to obtain the nano-coated growth-promoting bacterial agent.

In the process of preparing the aforementioned nano-coated growth-promoting bacterial agent, in the step S1, a viable bacteria count in the bacterial suspension of the growth-promoting bacterial agent is preferably 1 × 10⁸-1 × 10⁹ CFU/mL, e.g. 1 × 10⁸, 2 × 10⁸, 4 × 10⁸, 6 × 10⁸, 8 × 10⁸, 1 × 10⁹ CFU/mL or any value therebetween. The bacterial suspension of the growth-promoting bacterial agent is commercially available, or prepared according to various existing methods. For example, it can be obtained by culturing an activated growth-promoting bacterial agent to a late logarithmic growth phase, collecting the bacteria by centrifugation and washing the bacteria, and then resuspending the obtained growth-promoting bacterial agent in deionized water. A solvent employed for the washing may be deionized water or a PBS buffered solution. The concentration of the solution of the plant-derived polyphenol is preferably 5-20 mg/mL, e.g. 5, 8, 10, 12, 15, 18, 20 mg/mL or any value therebetween. A usage ratio of the bacterial suspension of the growth-promoting bacterial agent to the solution of the plant-derived polyphenol is preferably 600 µL:(25-100) µL, e.g. 600 µL:25 µL, 600 µL:50 µL, 600 µL:75 µL, 600 µL:100 µL or any value therebetween. The time for mixing uniformly by vortexing is 10-30 s, e.g. 10 s, 15 s, 20 s, 25 s, 30 s or any value therebetween.

In the process of preparing the aforementioned nano-coated growth-promoting bacterial agent, in the step S2, the concentration of the solution of the soluble multivalent metal ion is preferably 0.5-5 mg/mL, e.g. 0.5, 1, 1.5, 2, 2.5, 3, 3.5, 4, 4.5, 5 mg/mL or any value therebetween. A usage ratio of the solution of the soluble multivalent metal ion to the bacterial suspension of the growth-promoting bacterial agent is preferably (25-100) µL:600 µL, e.g. 25 µL:600 µL, 50 µL:600 µL, 75 µL:600 µL, 100 µL:600 µL or any value therebetween. The time for mixing uniformly by vortexing is preferably 10-30 s, e.g. 10 s, 15 s, 20 s, 25 s, 30 s or any value therebetween.

In the process of preparing the aforementioned nano-coated growth-promoting bacterial agent, the pH value of the employed PBS buffered solution is preferably 7.2-7.4, e.g. 7.20, 7.25, 7.30, 7.35, 7.40 or any value therebetween.

In a specific embodiment, the method for preparing the nano-coated growth-promoting bacterial agent includes:
step S1. preparation of a bacterial suspension of the growth-promoting bacterial agent: an activated growth-promoting bacterial agent is cultured to a late logarithmic growth phase, a bacterium is collected by centrifugation, and then the resultant bacterium is washed 1-5 times with deionized water or a PBS buffered solution, and an appropriate amount of the growth-promoting bacterial agent is resuspended in deionized water to obtain a bacterial suspension of the growth-promoting bacterial agent with a concentration of 1 × 10⁸-1 × 10⁹ CFU/mL. and
step S2. preparation of the nano-coated growth-promoting bacterial agent: a solution of a plant-derived polyphenol at a concentration of 5-20 mg/mL is added into the resultant bacterial suspension of the growth-promoting bacterial agent obtained in the step S1, where the usage ratio of the bacterial suspension of the growth-promoting bacterial agent to the solution of the plant-derived polyphenol is 600 µL:(25-100) µL. Then the mixture is mixed uniformly by vortexing for 10-30 s, and then a solution of a soluble multivalent metal ion at a concentration of 0.5-5 mg/mL is added into the resultant system, where the usage ratio of the bacterial suspension of the growth-promoting bacterial agent to the solution of the soluble multivalent metal ion is 600 µL:(25-100) µL. Then the mixture is mixed uniformly by vortexing for 10-30 s, and then 200-400 µL of a PBS buffered solution is added into the system to self-assemble on the surface of the growth-promoting bacterial agent to form a nano-coating. Then, the system is centrifuged at a rotation speed of 6,000-12,000 rpm/min for 3-10 min, the unbound polyphenol or metal ion in the supernatant is discarded, and the solid product is resuspended in a PBS buffered solution and washed for 1-3 times. The step S2` can be repeated for 1-3 times to obtain nano-coatings of different thicknesses, so as to obtain the nano-coated growth-promoting bacterial agent.

In the present disclosure, the nano-coated growth-promoting bacterial agent can be transported and stored in a solid form, and then formulated into a suspension of the nano-coated growth-promoting bacterial agent using a PBS buffered solution as a solvent immediately before use, or alternatively it can also be directly prepared into a suspension of the nano-coated growth-promoting bacterial agent using a PBS buffered solution as a solvent during the preparation process, and there is no particular limitation on this.

The composite growth-promoting bacterial agent provided by the present disclosure includes the nano-coated growth-promoting bacterial agent and a prebiotic. The nano-coated growth-promoting bacterial agent can be used independently to protect the growth-promoting bacterium from stresses from environmental factors such as ultraviolet radiation on leaves, enhance the leaf surface adhesion of the growth-promoting bacterium, and promote the survival rate and colonization of the growth-promoting bacterium in the phyllosphere. When the nano-coated growth-promoting bacterial agent is used in combination with the prebiotic, a microenvironment with a more effective protective effect and adhesion can be provided for the colonization of the growth-promoting bacterium in the phyllosphere. A mass ratio of the nano-coated growth-promoting bacterial agent to the prebiotic is preferably 100:(1-100). The prebiotic is particularly preferably an alginate, and specifically can be at least one selected from sodium alginate, potassium alginate, magnesium alginate, etc., and is particularly preferably sodium alginate. The inventors of the present disclosure have discovered that when a natural polymer sodium alginate is used as the prebiotic, the corresponding composite growth-promoting bacterial agent can improve the effectiveness of microbial inoculation more effectively and is more conducive to promoting crop growth.

The composite growth-promoting bacterial agent provided by the present disclosure can be obtained by adding an alginate solution into a bacterial suspension of the nano-coated growth-promoting bacterial agent, and mixing uniformly by vortexing. The specific process for preparing the bacterial suspension of the nano-coated growth-promoting bacterial agent has been described above and will not be repeated here anymore.

The present disclosure further provides use of the nano-coated growth-promoting bacterial agent and/or the composite growth-promoting bacterial agent in promoting plant foliage growth.

The nano-coated growth-promoting bacterial agent and the composite growth-promoting bacterial agent provided by the present disclosure have good microbial compatibility, can protect the growth-promoting bacterium from stresses e.g. active oxygen and ultraviolet rays, and enhance the adhesion performance at the phyllosphere through hydrogen bond interactions, which can enhance the colonization of the growth-promoting bacterium at the phyllosphere and effectively reduce the loss rate of the growth-promoting bacterial agent under rainfall erosion. The nano-coated growth-promoting bacterial agent and the composite growth-promoting bacterial agent provided by the present disclosure can improve the effectiveness of microbial inoculation, have a significant promoting effect on crop growth, and the products are practical. Moreover, the nano-coated growth-promoting bacterial agent and the composite growth-promoting bacterial agent provided by the present disclosure have a simple preparation process, low cost, and strong practicality, which is of great significance for the promotion and application of novel microbial agents.

There is no particular limitation on the types of leaves faces of plants to which the nano-coated growth-promoting bacterial agent provided by the present disclosure is applicable, and the nano-coated growth-promoting bacterial agent is applicable to leaves faces of various existing crops, e.g. the leave faces of rice, the leave faces of wheat, the leave faces of corn, the leave faces of soybean, the leave faces of tuber, the leave faces of tobacco, the leave faces of tomato, the leave faces of cotton, the leave faces of peanut, the leave faces of potato, etc.

The application scope of the nano-coated growth-promoting bacterial agent provided by the present disclosure includes biological fertilizer, increase in crop yield, plant disease resistance, enhancement of plant stress resistance, etc.

The present disclosure will be described in detail hereafter through examples.

### Example 1

In this example, a nano-coated growth-promoting bacterial agent was prepared by employing a highly efficient nitrogen-fixing strain *Klebsiella* variicola W12 (hereinafter referred to as "W12" for short, with a deposit number of CGMCC NO. 25294), tannic acid and iron ions. The specific steps were as follows:

step S1. an activated growth-promoting bacterial agent was cultured to a late logarithmic growth phase, then W12 bacterial cells were collected by centrifuging under a condition of 8,000 rpm/min for 10 min. The resultant bacterial cells were washed 2 times with a PBS buffered solution, and the resultant growth-promoting bacterial agent was resuspended in an appropriate amount of deionized water, and adjusted the OD value to 0.8, so as to obtain a bacterial suspension of the growth-promoting bacterial agent with a concentration of 3 × 10⁸ CFU/mL.

step S2. 600 µL of the bacterial suspension of the growth-promoting bacterial agent obtained in the step S1 was taken, added with 50 µL of a tannic acid solution with a concentration of 5 mg/mL, and mixed uniformly by vortexing for 20 s, then the resultant system was added with 25 µL of a FeCl₃ solution with a concentration of 1 mg/mL, mixed uniformly by vortexing for 20 s, then the system was added with 300 µL of a PBS buffered solution (with a pH value of 7.4, the same hereafter) and thereafter centrifuged at a rotation speed of 10,000 rpm/min for 4 min, the supernatant was discarded, and the resultant solid product was washed for 2 times with a PBS buffered solution, and then resuspended in a PBS buffered solution to obtain a bacterial suspension of the nano-coated growth-promoting bacterial agent, which was recorded as W12-TA-Fe.

### Example 2

An appropriate amount of a sodium alginate mother liquor with a concentration of 2% was added into the bacterial suspension W12-TA-Fe of the nano-coated growth-promoting bacterial agent obtained in Example 1 to make the final concentration of sodium alginate in the system be 0.05%. The system was mixed by vortexing for 50 s to obtain a bacterial suspension of the nano-coated growth-promoting bacterial agent, which was recorded as W12-TA-Fe-SA.

### Example 3

In this example, *Paenibacillus polymyxa* (hereinafter referred to as "Pae" for short, having a strain number of ACCC 10252), tannic acid and iron ions were employed to prepare a nano-coated growth-promoting bacterial agent. The specific steps were as follows:
step S1. an activated growth-promoting bacterial agent was cultured to a late logarithmic growth phase, and then centrifuged under a condition of 8,000 rpm/min for 10 min to collect Pae bacterial cells. The resultant bacterial cells were washed 2 times with a PBS buffered solution, and the resultant growth-promoting bacterial agent was resuspended in deionized water to adjust the OD value to 0.7.
step S2. 8 mL of the suspension of the growth-promoting bacterial agent obtained in the step S1 was taken, added with 700 µL of a tannic acid solution with a concentration of 10 mg/mL, and mixed uniformly by vortexing for 20 s, then the resultant system was added with 500 µL of a FeCl₃ solution with a concentration of 2 mg/mL, mixed uniformly by vortexing for 20 s, then the system was added with 4 mL of a PBS buffered solution and thereafter centrifuged at a rotation speed of 10,000 rpm/min for 4 min, the supernatant was discarded, and the resultant solid product was washed for 2 times with a PBS buffered solution, and then resuspended in a PBS buffered solution to obtain a bacterial suspension of the nano-coated growth-promoting bacterial agent, which was recorded as Pae-TA-Fe; and
step S3. An appropriate amount of a sodium alginate solution with a concentration of 2% was added into the bacterial suspension Pae-TA-Fe of the nano-coated growth-promoting bacterial agent obtained in the step S2 to make the final concentration of sodium alginate in the system be 0.1%. The system was mixed by vortexing for 50 s to obtain a bacterial suspension of the nano-coated growth-promoting bacterial agent, which was recorded as Pae-TA-Fe-SA.

### Example 4

In this example, *Bacillus velezensis* (hereinafter referred to as "Bac" for short, having a strain number of ACCC 60428), tannic acid and iron ions were employed to prepare a nano-coated growth-promoting bacterial agent. The specific steps were as follows:
step S1. an activated growth-promoting bacterial agent was cultured to a late logarithmic growth phase, and then centrifuged under a condition of 8,000 rpm/min for 10 min to collect Bac bacterial cells. The resultant bacterial cells were washed 2 times with a PBS buffered solution, and the resultant growth-promoting bacterial agent was resuspended in deionized water to adjust the OD value to 0.85.
step S2. 10 mL of the suspension of the growth-promoting bacterial agent obtained in the step S1 was added with 1 mL of a tannic acid solution with a concentration of 4 mg/mL, and mixed uniformly by vortexing for 20 s, then the resultant system was added with 500 µL of a FeCl₃ solution with a concentration of 3.2 mg/mL, mixed uniformly by vortexing for 20 s, then the system was added with 5 mL of a PBS buffered solution and thereafter centrifuged at a rotation speed of 10,000 rpm/min for 4 min, the supernatant was discarded, and the resultant solid product was washed 2 times with a PBS buffered solution, and then resuspended in a PBS buffered solution to obtain a bacterial suspension of the nano-coated growth-promoting bacterial agent, which was recorded as Bac-TA-Fe; and
step S3. An appropriate amount of a sodium alginate solution with a concentration of 2% was added into the bacterial suspension Bac-TA-Fe of the nano-coated growth-promoting bacterial agent obtained in the step S2 to make the final concentration of sodium alginate in the system be 0.01%. The system was mixed by vortexing for 50 s to obtain a bacterial suspension of the nano-coated growth-promoting bacterial agent, which was recorded as Bac-TA-Fe-SA.

### Test Example 1

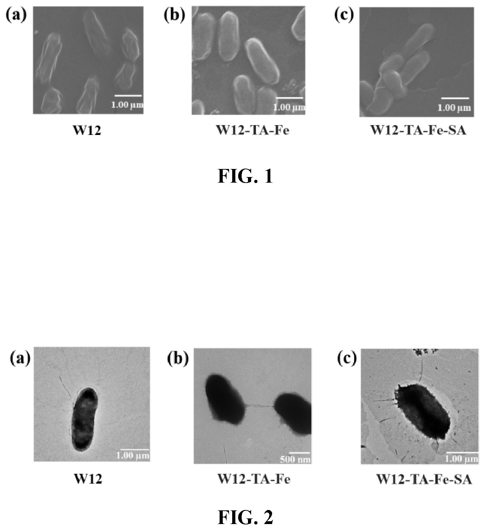

An untreated growth-promoting bacterial agent, a nano-coated growth-promoting bacterial agent and a composite growth-promoting bacterial agent were observed by scanning electron microscopy and transmission electron microscopy. A scanning electron micrograph of the untreated growth-promoting bacterial agent W12, the composite growth-promoting bacterial agent W12-TA-Fe obtained in Example 1, and the composite growth-promoting bacterial agent W12-TA-Fe-SA obtained in Example 2 was shown in FIG. 1, and a transmission electron microscope diagram of them was shown in FIG. 2. As could be seen from FIGs. 1 and 2, a nano-coated growth-promoting bacterial agent was successfully prepared, which had significant morphological differences with the untreated growth-promoting bacterial agent. Compared with the untreated growth-promoting bacterial agent, the dimension of nano-coated growth-promoting bacterial agent was increased, the edges of W12-TA-Fe and W12-TA-Fe-SA became rougher, and single-cell nano-coatings of varying thicknesses were visible on the surfaces.

### Test Example 2

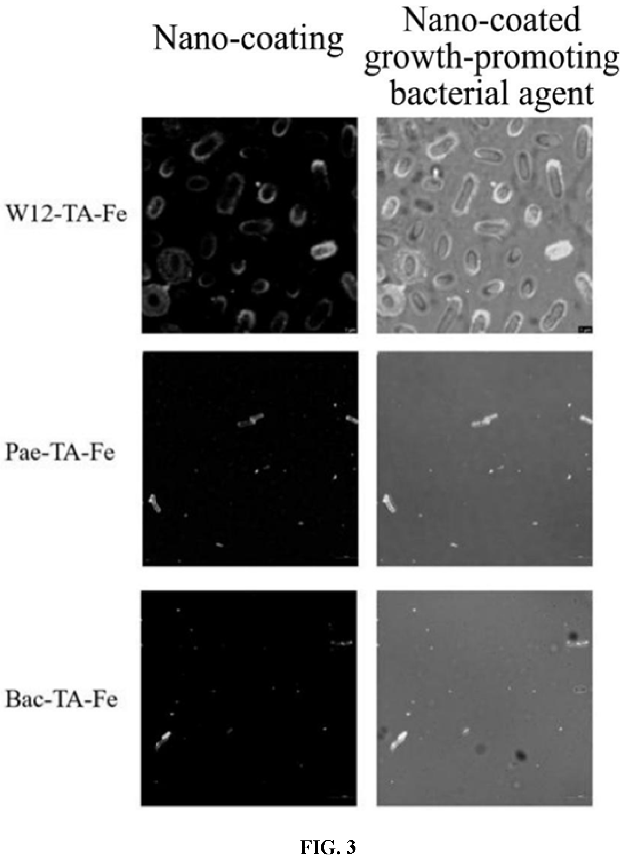

The bacterial suspensions of the nano-coated growth-promoting bacterial agent obtained in Examples 1, 3, and 4 were subjected to laser confocal scanning, and the resultant results were shown in FIG. 3. As shown in FIG. 3, a nano-coating layer surrounding a growth-promoting bacterium could be seen through fluorescein labeling, indicating that nano-coatings were successfully prepared on the surfaces of different growth-promoting bacteria.

### Test Example 3

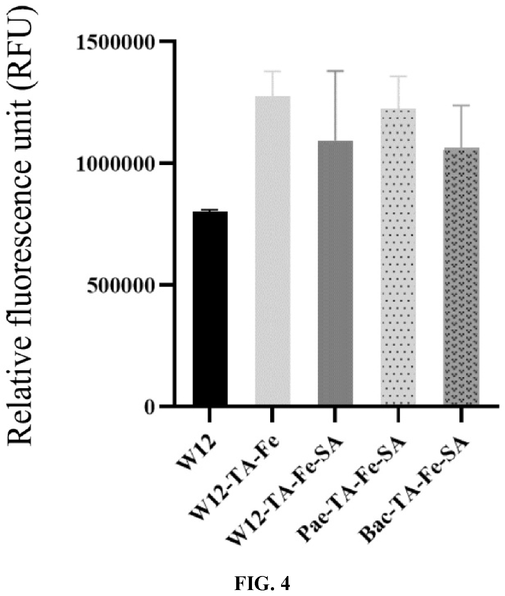

The untreated growth-promoting bacterial agents and the composite growth-promoting bacterial agents obtained in the aforementioned examples were detected for cell metabolic activity. The specific process was as follows:
100 µL of the bacterial suspension was added with 5 µL of an Alamar Blue detection reagent, and then incubated in a dark environment for 30 min, the color of the solution began to change from indigo blue to pink. Then, the relative fluorescence unit (RFU) was detected with a fluorescence plate reader. The results of it were shown in Table 2 and FIG. 4. As could be seen from Table 2 and FIG. 4, the nano-coated growth-promoting bacterial agent would not affect the cell metabolic activity thereof and had good biocompatibility.

**Table 1**

| Item | Growth-promoting bacterial agent | Relative fluorescence unit (RFU) |
|---|---|---|
| Untreated Control | W12 | 803571.3 ± 6723.7 |
| Example 1 | W12-TA-Fe | 1276059.3 ± 101517.6 |
| Example 2 | W12-TA-Fe-SA | 1092811.7 ± 285991.5 |
| Example 3 | Pae-TA-Fe-SA | 1223568.7 ± 134415.6 |
| Example 4 | Bac-TA-Fe-SA | 1062003.7 ± 176224.2 |

### Test Example 4

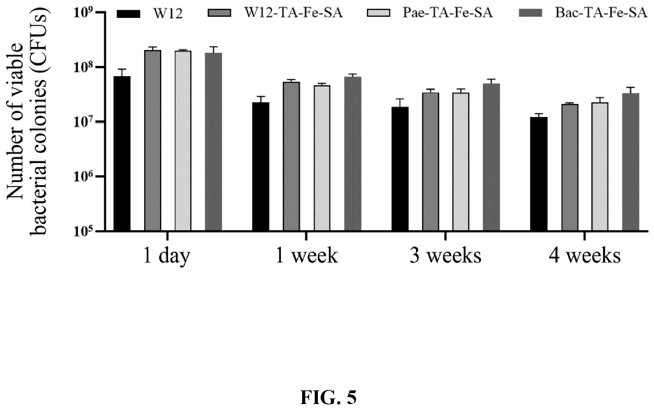

The untreated growth-promoting bacterial agents and the composite growth-promoting bacterial agents obtained in the aforementioned examples were detected for storage activity. The specific process was as follows:
The aforementioned four bacterial agents were adjusted to a OD value of 0.8, and then refrigerated at 4°C to simulate the storage of conventional commercial liquid bacteria. Every 1 week, 100 µL of each of the bacterial agents was taken for gradient dilution and then coated on a selective solid medium plate. The plate was placed at 30°C and cultured for 24 h, and then the number of colonies was counted to obtain the effective viable bacterial count, and sampling was conducted continuously for 4 weeks in triplicates. The resultant results were averaged. The changes in the effective counts of the growth-promoting bacteria in different bacterial agents over time were shown in FIG. 5. As could be seen from FIG. 5, the nano-coated growth-promoting bacterial agent could enhance its viability during long term storage, where after 4 weeks, the effective viable bacterial counts of the bacteria agents W12-TA-Fe-SA each exceeded 2 × 10⁷ CFU/mL, which was 2.5 times more than that of the untreated W12 bacteria. **Test Example 5**

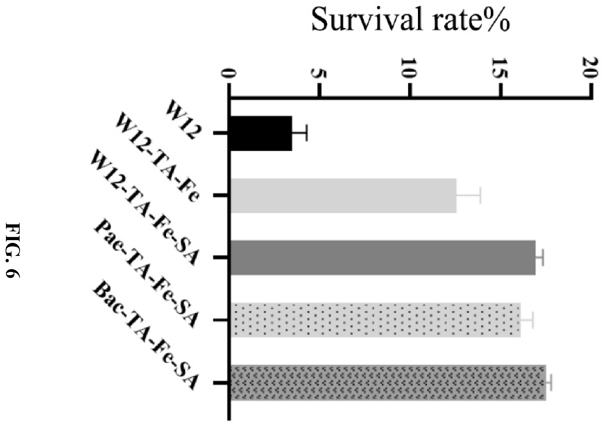

The survival rates of the untreated growth-promoting bacterial agents and the composite growth-promoting bacterial agents obtained in the aforementioned examples in hydrogen peroxide were detected. The specific process was as follows:
1 mL of the bacterial agent was taken and dissolved in 8 mmol/L of H₂O₂. After 90 min, it was taken out, centrifuged and washed. 100 µL of each of the bacterial agent treated with H₂O₂ and the bacterial agent not treated with H₂O₂ was taken for gradient dilution, and coated on selective solid medium plate. The plate was placed at 30°C and cultured for 24 h, and then the number of colonies was counted to obtain the effective viable bacterial count, and sampling was conducted in triplicates. The resultant results were averaged. Survival ratio = the number of survived colonies/total number of colonies. The survival rates of different bacterial agents in hydrogen peroxide were shown in Table 2 and FIG. 6. As could be seen from Table 2 and FIG. 6, the nano-coated growth-promoting bacterial agent could protect nitrogen-fixing bacteria to survive in H₂O₂, and the survival rate was higher than that of the untreated growth-promoting bacterial agent W12. Both the nano-coating and sodium alginate contribute to a certain antioxidative capacity.

**Table 2**

| Item | Growth-promoting bacterial agent | Survival rate (%) |
|---|---|---|
| Untreated control | W12 | 3.48 ± 0.85 |
| Example 1 | W12-TA-Fe | 12.55 ± 1.34 |
| Example 2 | W12-TA-Fe-SA | 16.95 ± 0.40 |
| Example 3 | Pae-TA-Fe-SA | 16.11 ± 0.70 |
| Example 4 | Bac-TA-Fe-SA | 17.49 ± 0.34 |

### Test Example 6

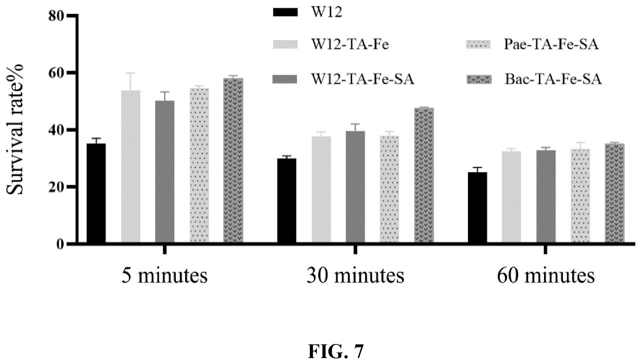

The survival rates of the untreated growth-promoting bacterial agents and the composite growth-promoting bacterial agents obtained in the aforementioned examples under ultraviolet irradiation were detected. The specific process was as follows:
500 µL of a bacterial agent was taken and putted into a 24-well plate with a lid, and irradiated at a fixed distance from an ultraviolet lamp on a super clean bench for 5 min, 30 min, and 60 min. Sampling was performed in a time sequence, and 100 µL of each of the aforementioned bacterial agents and the bacterial agents not treated with UV was taken for gradient dilution and coated on a selective solid medium plate. The plate was placed at 30°C and cultured for 24 h, and then the number of colonies was counted to obtain the effective viable bacterial count, and sampling was conducted in triplicates. The resultant results were averaged. Survival ratio = the number of survived colonies/total number of colonies. The survival rates of the different bacterial agents irradiated with UV for 5 minutes, 30 minutes, and 60 minutes were shown in FIG. 7. The survival rates of the different bacterial agents under UV irradiation for 5 minutes were shown in Table 3. As could be seen from Table 3 and FIG. 7, the nano-coated nitrogen-fixing bacterium inoculant could protect nitrogen-fixing bacteria from high-intensity UVC stresses.

**Table 3**

| Item | Growth-promoting bacterial agent | Survival rate (%) |
|---|---|---|
| Untreated control | W12 | 35.32 ± 1.76 |
| Example 1 | W12-TA-Fe | 53.76 ± 6.14 |
| Example 2 | W12-TA-Fe-SA | 50.24 ± 3.04 |
| Example 3 | Pae-TA-Fe-SA | 54.59 ± 0.85 |
| Example 4 | Bac-TA-Fe-SA | 58.10 ± 0.97 |

### Test Example 7

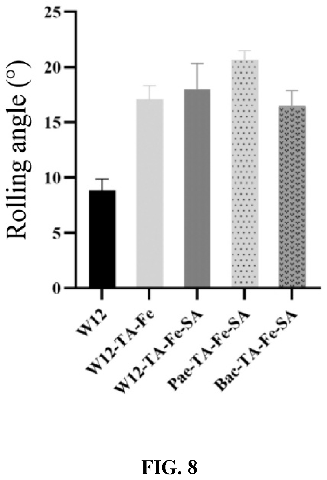

The untreated growth-promoting bacterial agents and the composite growth-promoting bacterial agents obtained in the aforementioned examples were tested for foliage rolling angles. The specific process was as follows:
Leaves of rice were cut into 2 cm² × 6 cm² and fixed on a 30 angle platform. 10 µL of the bacterial solution was added dropwise onto the leaf surface using a microsyringe. The test platform was slowly rotated, and the critical tilt angle of the test platform when the droplet rolled was the rolling angle. The larger the rolling angle, the stronger the adhesion of the droplet of the bacterial agent on the leaf surface. The rolling angles of different bacterial agents on the leaf surface of rice were shown in Table 4 and FIG. 8.

**Table 4**

| Item | Growth-promoting bacterial agent | Rolling angle (°) |
|---|---|---|
| Untreated control | W12 | 8.83 ± 1.04 |
| Example 1 | W12-TA-Fe | 17.03 ± 1.27 |
| Example 2 | W12-TA-Fe-SA | 17.97 ± 2.35 |
| Example 3 | Pae-TA-Fe-SA | 20.63 ± 0.85 |
| Example 4 | Bac-TA-Fe-SA | 16.43 ± 1.40 |

As shown in Table 4 and FIG. 8, the nano-coated growth-promoting bacterial agent improved the adhesion ability of it in the phyllosphere of rice. The rolling angle of the bacterial agent W12-TA-Fe-SA on the leaf surface of rice was improved by about 2.3 times than that of W12.

### Test Example 8

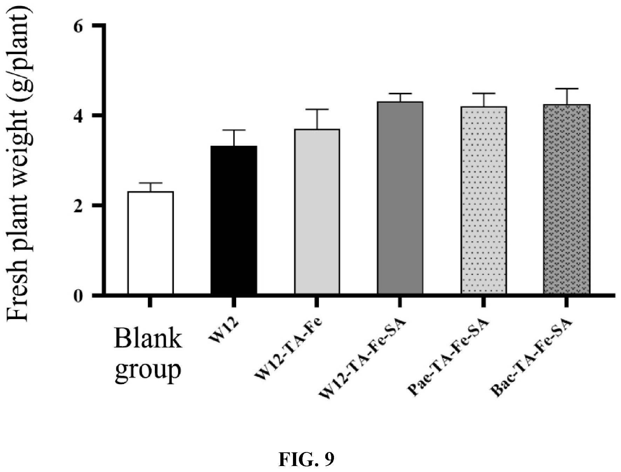

The application effects of the growth-promoting bacterial agents obtained in the aforementioned examples on the leaves of rice in a greenhouse were tested, and the process was as follows:
(1) Nipponbare rice seeds were taken, disinfected, subjected to germination-accelerating treatment, and then transferred into a hydroponic culture box for continued growth.
(2) The experiment was divided into two groups, one was an experimental group applied with the bacterial agents (respectively the untreated growth-promoting bacterial agent W12, the nano-coated growth-promoting bacterial agents W12-TA-Fe, W12-TA-Fe-SA, Pae-TA-Fe-SA, and Bac-TA-Fe-SA obtained in Examples 1-4), and the other was a control group sprayed with water without application of the bacterial agents. Each group was set in 4 replicates.
(3) When the rice seedlings had grown to two true leaves, seedlings with similar growth vigor were selected for treatment by spraying with the bacteria, inoculated with the bacterial suspension with an OD = 0.8 at 0.5 mL/plant.
(4) After 37 days, the rice plants were harvested and the biomass of each group was determined. The results were shown in FIG. 9.

As could be seen from FIG. 9, 37 days after the spraying application, the rice growth was significantly promoted in each group inoculated with the nano-coated growth-promoting bacterial agent, compared with that in the control group sprayed with water.

Although the embodiments of the present disclosure have been shown and described above, it can be understood that the aforementioned embodiments are illustrative and are not to be construed as limitations on the present disclosure. Changes, modifications, substitutions and variations can be made to the aforementioned embodiments within the scope of the present disclosure by those of ordinary skill in the art, without departing from the principle and spirit of the present disclosure.

## Claims

1. A nano-coated growth-promoting bacterial agent, comprising a growth-promoting bacterial agent and a nano-coating formed by self-assembly of a plant-derived polyphenol and a soluble multivalent metal ion on the surface of the growth-promoting bacterial agent.

2. The nano-coated growth-promoting bacterial agent according to claim 1, wherein a thickness of the nano-coating is 20-100 nm.

3. The nano-coated growth-promoting bacterial agent according to claim 1, wherein a mass ratio of the plant-derived polyphenol to the soluble multivalent metal ion is (1-10):1.

4. The nano-coated growth-promoting bacterial agent according to claim 1, wherein the growth-promoting bacterial agent is at least one selected from *Klebsiella*, *Paenibacillus polymyxa*, *Bacillus velezensis* and *Pseudomonas*.

5. The nano-coated growth-promoting bacterial agent according to claim 1, wherein the plant-derived polyphenol is at least one selected from tannic acid, gallic acid, catechin and apple polyphenol.

6. The nano-coated growth-promoting bacterial agent according to claim 1, wherein the soluble multivalent metal ion is selected from at least one of Fe³⁺, Al³⁺, Mg²⁺, Zn²⁺ and Ti⁴⁺.

7. A method for preparing the nano-coated growth-promoting bacterial agent according to claim 1, comprising mixing the growth-promoting bacterial agent, the plant-derived polyphenol and the soluble multivalent metal ion in a solution, so that the plant-derived polyphenol and the soluble multivalent metal ion self-assemble on the surface of the growth-promoting bacterial agent to form a nano-coating.

8. The method for preparing the nano-coated growth-promoting bacterial agent according to claim 7, wherein the mixing is carried out in a manner comprising the following steps:
step S1. mixing a bacterial suspension of the growth-promoting bacterial agent with a solution of the plant-derived polyphenol uniformly by vortexing to obtain a bacterial suspension/plant-derived polyphenol solution; and
step S2. mixing the bacterial suspension/plant-derived polyphenol solution with a solution of the soluble multivalent metal ion uniformly by vortexing, and then optionally washing with a PBS buffered solution to obtain the nano-coated growth-promoting bacterial agent.

9. The method for preparing the nano-coated growth-promoting bacterial agent according to claim 8, wherein in the step S1, the bacterial suspension of the growth-promoting bacterial agent is obtained by culturing an activated growth-promoting bacterial agent to a late logarithmic growth phase, collecting a bacteria by centrifugation and washing the bacteria, and then resuspending the obtained growth-promoting bacterial agent in deionized water.

10. The method for preparing the nano-coated growth-promoting bacterial agent according to claim 8, wherein a viable bacteria count in the bacterial suspension of the growth-promoting bacterial agent is 1 × 10⁸-1 × 10⁹ CFU/mL.

11. The method for preparing the nano-coated growth-promoting bacterial agent according to claim 8, wherein a concentration of the solution of the plant-derived polyphenol is 5-20 mg/mL.

12. The method for preparing the nano-coated growth-promoting bacterial agent according to claim 8, wherein a usage ratio of the bacterial suspension of the growth-promoting bacterial agent to the solution of the plant-derived polyphenol is 600 µL:(25-100) µL.

13. The method for preparing the nano-coated growth-promoting bacterial agent according to claim 8, wherein a time for mixing uniformly by vortexing is 10-30 s.

14. The method for preparing the nano-coated growth-promoting bacterial agent according to claim 8, wherein in the step S2, a concentration of the solution of the soluble multivalent metal ion is 0.5-5 mg/mL; and a usage ratio of the solution of the soluble multivalent metal ion to the bacterial suspension of the growth-promoting bacterial agent is (25-100) µL:600 µL.

15. The method for preparing the nano-coated growth-promoting bacterial agent according to claim 8, wherein a pH value of the PBS buffered solution is 7.2-7.4.

16. A composite growth-promoting bacterial agent, comprising the nano-coated growth-promoting bacterial agent according to claim 1 and a prebiotic.

17. The composite growth-promoting bacterial agent according to claim 16, wherein a mass ratio of the nano-coated growth-promoting bacterial agent to the prebiotic is 100:(1-100).

18. The composite growth-promoting bacterial agent according to claim 16, wherein the prebiotic is an alginate.

19. The composite growth-promoting bacterial agent according to claim 16, wherein the composite growth-promoting bacterial agent is used in the form of a solution.

20. Use of the nano-coated growth-promoting bacterial agent according to claim 1 and/or the composite growth-promoting bacterial agent according to claim 8 in promoting plant foliage growth.
